# EUROPÄISCHE PATENTSCHRIFT

(11) **EP 0 614 757 B1**
(45) Veröffentlichungstag und Bekanntmachung des Hinweises auf die Patenterteilung: **01.07.1998**
(21) Anmeldenummer: 94102898.7
(22) Anmeldetag: 25.02.1994
(51) Int. Cl.: B32B 27/32

(54) **Mehrschichtige, gereckte, heisssiegelbare, hochgleitfähige Polypropylenfolie mit verbesserten Barriereeigenschaften**
Multilayered, stretched, heat-sealable, highly slippable polypropylene film with improved barrier properties
Feuille multicouche étirée thermosoudable lubrifiée en polypropylène ayant des propriétés de barrière améliorées

(30) Priorität: 10.03.1993 DE 4307441
(43) Veröffentlichungstag der Anmeldung: 14.09.1994
(73) Patentinhaber: WOLFF WALSRODE AKTIENGESELLSCHAFT, D-29699 Walsrode (DE)
(72) Erfinder: Brandt, Rainer, Dr., D-29664 Walsrode (DE); Reiners, Ulrich, Dr., D-29643 Neuenkirchen (DE); Krallmann, Anton, Dipl.-Ing., D-29683 Fallingbostel (DE); Albinus, Eberhard, Dipl.-Ing., D-29699 Bomlitz (DE); Neelen, Neele, Dr., D-29683 Fallingbostel (DE)
(74) Vertreter: Braun, Rolf, Dr.

(56) Entgegenhaltungen:
- EP-A- 0 217 598
- EP-A- 0 222 295
- EP-A- 0 468 333
- DE-A- 3 940 173
- Ullmann, Enzyklopädie der Techn. Chem., 4. Auflage, band 12, seite 539-553

## Beschreibung

Die Erfindung betrifft eine hochgeleitfähige, mehrschichtige, gereckte, heißsiegelbare Polypropylenfolie mit verbesserter Wasserdampfsperrwirkung und verminderter Globalmigration. Die die Erfindung betreffende Folie weist als kennzeichnende Merkmale eine Basisschicht aus Polypropylen, Kohlenwasserstoffharz und Erucasäureamid als Gleitmittel, zwei die Basisschicht ummantelnde Schichten (die in Zukunft Mantelschichten genannt werden) aus hochisotaktischem Polypropylen, frei von Kohlenwasserstoffharz und Erucasäureamid, und zwei heißsiegelfähige erucasäureamidhaltige Deckschichten aus einem olefinischen Co- oder Terpolymer auf.

Der Gegenstand der vorliegenden Erfindung stellt eine Präzisierung der mit gleichem Prioritätsdatum eingereichten EP 0614758 dar.

Sollen Polypropylenfolien auf schnellaufenden Verpackungsmaschinen zum Einsatz kommen, so ist es notwendig, hochgleitfähige Folien zu benutzen. Insbesondere bei dem Einschlag von Zigarettenschachteln kommen sehr schnellaufende Verpackungsmaschinen zur Anwendung (Einschlag von bis zu 800 Schachteln pro Minute). Zur Fertigung hochgleitfähiger Polypropylenfolien werden gewöhnlich Polydimethylsiloxane als Gleitmittel verwendet. So ist in EP-B 0 027 586 eine hochgleitfähige Polypropylenfolie beschrieben, die als Gleitmittel Polydimethylsiloxan verwendet. Die Folie zeigt zwar gute Gleiteigenschaften, ihre Wasserdampfsperrwirkung läßt allerdings zu wünschen übrig.

In EP-B 247 898 wird eine Polypropylenfolie beschrieben, die durch Zusatz von Kohlenwasserstoffharz verbesserte mechanische und optische Eigenschaften aufweist; zusätzlich werden verbesserte Barriereeigenschaften gegen Wasserdampf und Sauerstoff beschrieben.

Die Gleiteigenschaften dieser Folie sind jedoch aufgrund des Einsatzes von klebrigem Kohlenwasserstoffharz (Hauptanwendungsgebiet für Kohlenwasserstoffharze ist der Einsatz in Schmelzklebern) nicht optimal. In EP-A 468 333 wird eine kohlenwasserstoffharzhaltige Polypropylenfolie beschrieben, die verbesserte Barriereeigenschaften hinsichtlich Wasserdampf und Sauerstoff bei gleichzeitig verbesserter Maschinengängigkeit hat.

Jedoch ist die Maschinengängigkeit für schnellaufende Verpackungsmaschinen nicht ausreichend. Hinzu kommt, daß eine Folie mit hohem Gehalt an Kohlenwasserstoffharz (10 bis 40 Gew.-%) sehr hohe Werte bezüglich der Globalmigration aufweist.

Die Globalmigration ist ein Maß für die Gesamtmenge der Teilchen, welche beim Kontakt Folie/Füllgut (insbesondere Lebensmittel) aus der Folie in das Füllgut wandern.

Folie des erfindungsgemäßen Typs weisen eine mindestens um 30 % verringerte Globalmigration gegenüber dreischichtigen Folien mit vergleichbarer Sperrwirkung gegen Wasserdampf auf. Daher erwies es sich als notwendig, eine Folie zu fertigen, die aufgrund des Einsatzes auf schnellaufenden Verpackungsmaschinen sehr gute Gleiteigenschaften bei gleichzeitig guten Sperreigenschaften für Wasserdampf und möglichst niedriger Globalmigration aufweist.

Gelöst wird diese Aufgabe durch eine Folie gemaß Patentanspruch 1. Bevorzugte Merkmale bestehen darin, daß die Basisschicht aus Polypropylen, zusätzlich ein Kohlenwasserstoffharz, in einer Menge von 1 bis 40 Gew.-%, insbesondere 5 bis 30 Gew.-% (alle hier und im folgenden angegebenen Gew.*-*%-Angaben beziehen sich auf die jeweilige Schicht), und 0,05 bis 0,5 Gew.-% Erucasäureamid enthält. Bevorzugt wird für die Basisschicht ein isotaktisches Polypropylen mit einem Schmelzpunkt von 160°C bis 170°C eingesetzt, welches dadurch gekennzeichnet ist, daß der Schmelzflußindex (MFI) im Bereich von 1 g/10 min bis 9 g/10 min, insbesondere von 1,6-4,2 g/10 min bei 230°C und 2,16 kg Belastung (DIN 53 735), liegt.

Bei dem niedrigmolekularen Kohlenwasserstoffharz handelt es sich um ein Harz, das dadurch gekennzeichnet ist, daß der Erweichungspunkt >130°C ist (ASTM E 28). In der Literatur (EP 468 333) ist bekannt, daß das Einarbeiten eines solchen Harzes in eine dreischichtige Folie zur Verbesserung der Wasserdampfbarriereeigenschaften, der optischen Eigenschaften und der mechanischen Eigenscharten führt. Die Kohlenwasserstoffharze lassen sich in drei Gruppen gliedern: die Petroleumharze, die Terpenharze und die Harze aus dem Kohlenteer. Aus der Gruppe der Petroleumharze werden bevorzugt die Cyclopentadien-, die Styrol und Methylstyrolharze eingesetzt. Es handelt sich um oligomere Polymere oder Copolymere mit Molmassen, die kleiner als 2 000 g/mol sind. Da die Polypropylenfolien gewöhnlichenweise farblos, transparent gefertigt werden, ist es notwendig, die Harze in Gegenwart eines Katalysators möglichst vollständig zu hydrieren. Die Harze der Terpengruppe enthalten im wesentlichen oligomere, hydrierte Polymere aus den Monomeren Pinen, β-Pinen und Dipenten (D, L Limonen) und werden auch zur Modifikation von Polypropylen eingesetzt. Für die Verbesserung der Wasserdampfbarriere des Polypropylens eignen sich ganz besonders die hydrierten oligomeren Cyclopentadienharze (HOCP), deren Erweichungspunkt größer oder gleich 130°C ist.

Bevorzugt wird ein Erucasäureamid eingesetzt, welches dadurch gekennzeichnet ist, daß der Amidgehalt bei minimal 98 % (Bestimmung: IR-spektroskopisch), und der Gehalt an Erucasäure bei minimal 90 % (Bestimmung: Gaschromatographie) liegt.

Die Mantelschichten sind frei von Kohlenwasserstoffharz und Erucasäureamid, sie enthalten ein hochisotaktisches Polypropylen, welches dadurch gekennzeichnet ist, daß die Isotaktizität größer als 94 % ist [Meßmethode: ¹³C-NMR; J.C. Randall, J. Polym. Sci.: J. Polym. Phys. Ed. 12, 703 bis 712 (1974) und gleiche Zeitschrift: 14, 1693 bis 1700 (1976)]. Bevorzugt wird ein Material mit einem Schmelzpunkt von 158 bis 170°C. Die Dicke der Mantelschichten liegt zwischen 0,5 µm und 2 µm.

Um eine gute Maschinengängigkeit bei guten Siegeleigenschaften zu gewährleisten, ist es notwendig, die Siegel- bzw. Deckschichten mit Additiven auszustatten. Unter den zahlreichen, für solche Schichten eingesetzten Materialien, werden folgende bevorzugt eingesetzt:
- statistische Propylen/Ethylen-Copolymere
- statistische Propylen/Buten (1)-Copolymere
- statistische Propylen/Ethylen/Olefin-Terpolymere
- Mischungen aus zwei oder drei der vorstehenden Polymere.

Besonders bevorzugt wird ein Copolymer, welches 90 bis 99 % Polypropylen und 1,0 bis 10 % Polyethylen enthält. Dieses Siegelschichtmaterial ist dadurch gekennzeichnet, daß es einen Schmelzpunkt von 110°C bis 150°C, insbesondere 120°C bis 140°C hat.

Als Additive, die zur besseren Maschinengängigkeit beitragen, werden Antistatika, Gleitmittel und Antiblockmittel eingesetzt

Antistatika sind Substanzen, die über einen hydrophilen Molekülteil und einen langkettigen hydrophoben Kohlenwasserstoffrest verfügen. In den Folien richten sich diese Substanzen so aus, daß der hydrophile Teil an der Oberfläche der Folie Wasser anlagern kann, woraus eine Erniedrigung des Oberflächenwiderstandes resultiert, die letztlich die antistatische Wirkung ausmacht. Bevorzugt werden die ethoxylierten Amine eingesetzt, insbesondere N-(C₁₂-C₁₈-alkyl)-N',N''-bis(2-hydroxyethyl)amine verbinden die Forderung nach der lebensmittelrechtlichen Unbedenklichkeit und antistatischer Wirkung.

Als Gleitmittel werden Amide der Carbonsäuren eingesetzt. Typische Beispiele sind Erucasäureamid und Ölsäureamid. Weiterhin werden Polymere aus der Gruppe der Polyalkylsiloxane eingesetzt. Überraschenderweise zeigte sich, daß Polydimethylsiloxan im Falle von kohlenwasserstoffharzhaltigen Folien keine gute Wirkung zeigt, während der Einsatz von Erucasäureamid in einer Konzentration von 0,05 bis 0,5 Gew.-% (bezogen auf die Deckschicht) im Zusammenwirken mit dem fünfschichtigen Aufbau zu hochgleitfähigen Folien führte.

Bevorzugte Antiblockmittel sind Siliciumdioxid, Silikate oder Polymere, die nicht mit den Deckschichtrohstoffen mischbar sind (z.B. Polycarbonat, Polyamid, Polymethylmethacrylat). Insbesondere SiO₂ in einer Konzentration von 0,1 bis 0,3 Gew.-% (bezogen auf die Deckschicht) erwies sich als gutes Antiblockmittel für die hochgleitfähige kohlenwasserstoffharzhaltige Polypropylenfolie.

Die erfindungsgemäßen Folien können nach den üblichen Verfahren wie Laminierung, Beschichtung oder Schmelzcoextrudion hergestellt werden. Nach der Verfestigung des Dickfilms auf der Gießwalze wird der Film in Laufrichtung (längs) mit einem Verstreckungsquotienten von 4/1 bis 7/1 bei einer Temperatur von 120°C bis 150°C gereckt. Das Reckverhältnis im Querrichtung liegt vorzugsweise zwischen 8/1 und 12/1 und das Querrecken des Filmes wird bei einer Temperatur zwischen 130°C und 170°C vorgenommen. Die nachfolgende Thermofixierung wird vorzugsweise bei 1°C bis 40°C unter der Querrecktemperatur durchgeführt. Um die Affinität der weitgehend unpolaren Folienoberfläche zu den Druckfarben zu gewährleisten, ist es nötig, die Folie einer Corona-(Sprüh) Vorbehandlung zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma- und Fluorvorbehandlung.

### Beispiele

### Beispiel 1

Mittels dem oben beschriebenen Verfahren wurde ein biaxial orientierte Folie (Flächenreckverhältnis: 45/1; Längsrecktemperatur: 142°C; Querrecktemperatur: 160°C) hergestellt, die folgenden Aufbau aufwies (alle Angaben in Gew.-% beziehen sich auf die jeweilige Schicht):
- Gesamtdicke:: 25 µm

### Deckschichten:

- Dicke:: 1 µm
- Material:: Propylen/Ethylencopolymer mit 3,5 % Ethylenanteil, MFI: 5,0 g/10 min, 0,125 % SiO₂. ,mittlere Teilchengröße: 2,0 µm, 0,15 % Erucasäureamid, Amidanteil >98 %, Erucasäureanteil >90 %

### Mantelschichten:

- Dicke:: 1 µm
- Material:: hochisotaktisches Polypropylen, Isotaktizität: 97 %

### Kernschicht:

- Dicke:: 21 µm
- Material:: 69,85 % isotaktisches Polypropylen mit einem
MFI von 3,0 g/10 min
30 % Kohlenwasserstoffharzmasterbatch (auf Polypropylenbasis mit 50 % Harzanteil) mit einem Erweichungspunkt von 140°C, wobei das Kohlenwasserstoffharz ein hydriertes oligomeres Cyclopentadienharz ist,
0,15 Gew.-% Erucasäureamid; Amidanteil >98 %, Erucasäureanteil >90 %.

### Beispiel 2

Es wurde eine Folie gefertigt wie in Beispiel 1, deren Kernschicht jedoch 0,2 Gew.-% Erucasäureamid enthielt.

### Beispiel 3

Es wurde eine Folie gefertigt wie in Beispiel 1, deren Kernschicht jedoch 0,25 Gew.-% Erucasäureamid enthielt.

### Vergleichsbeispiel 1

Es wurde eine Folie gefertigt wie in Beispiel 1, die jedoch kein Erucasäureamid im Kern und den Deckschichten enthielt, stattdessen waren die Deckschichten mit 0,7 Gew.-% Polydimethylsiloxan ausgestattet.

### Vergleichsbeispiel 2

Es wurde eine Folie gefertigt wie in Beispiel 1 beschrieben, die jedoch kein Erucasäureamid im Kern und den Deckschichten enthielt, stattdessen waren die Deckschichten mit 0,3 Gew.-% Polydimethylsiloxan ausgestattet.

### Vergleichsbeispiel 3

Es wurde eine dreischichtige Folie gefertigt, deren Deckschichten und deren Kernschicht wie in Vergleichsbeispiel 1 ausgestattet waren, allerdings waren keine Mantelschichten vorhanden.

Folgende Tabelle zeigt, daß eine Folie des erfindungsgemäßen Typs bezüglich der Gleiteigenschaften unter Beibehaltung der Wasserdampfsperrwirkung erhebliche Vorteile hat.

| | Wddu/g/m²d | Reibzahl µ |
|---|---|---|
| Beispiel 1 | 0,60 | 0,28 |
| Beispiel 2 | 0,67 | 0,26 |
| Beispiel 3 | 0,62 | 0,25 |
| Vergleichsbeispiel 1 | 0,59 | 0,37 |
| Vergleichsbeispiel 2 | 0,63 | 0,43 |
| Vergleichsbeispiel 3 | 0,62 | 0,48 |

### Meßverfahren

### Bestimmung der Wasserdampfdurchlässigkeit:

Die Wasserdampfdurchlässigkeit wurde gemäß DIN 53 122, Teil 2, bei 23°C und 85 % relative Luftfeuchtedifferenz bestimmt.

### Bestimmung der Reibung:

Das Reibungsverhalten (Folie/Folie) wurde nach DIN 53 375 auf den jeweils vorbehandelten Seiten eine Woche nach der Produktion gemessen.

## Patentansprüche

1. Orientierte, insbesondere biaxial orientierte siegelfähige Polypropylenfolie mit verbesserter Wasserdampfsperrwirkung bei erheblich vermindertem Reibungskoeffizienten für Verpackungszwecke, dadurch gekennzeichnet, daß sie frei von Polydimethylsiloxan und wie folgt aufgebaut ist:
A B C B A
a) wobei C die Kernschicht, bestehend aus Polypropylen und einem Kohlenwasserstoffharz ist, das eine Molmasse bis zu etwa 2 000 g/mol aufweist und einen Erweichungspunkt über 130° hat, und 0,05 bis 0,5 Gew.-% Erucasäureamid
b) und B zwei Kohlenwasserstoffharz-freie Mantelschichten aus hochisotaktischem Polypropylen mit einer Isotaktizität >94 % sind, wobei das Verhältnis der Dicke der Mantelschicht zur Dicke der Basisschicht zwischen 0,01 und 0,1 liegt
c) und A zwei Deckschichten aus einem heißsiegelbaren Polyolefin-, Co- oder Terpolymeren sind, wobei diese Deckschicht mindestens ein Antiblockmittel, einAntistatikum und als Gleitmittel 0,05 bis 0,5 Gew.-% Erucasäureamid enthalten.

2. Siegelfähige Folie nach dem Anspruch 1, dadurch gekennzeichnet, daß die Basisschicht ein Kohlenwasserstoffharz aus der Gruppe der Petroleumharze, Terpenharze oder Kohlenteerharze enthält.

3. Siegelfähige Folie nach Anspruch 2, dadurch gekennzeichnet, daß das Kohlenwasserstoffharz ein hydriertes, oligomeres Cyclopentadienharz ist.

4. Siegelfähige Folie nach den Ansprüchen 1 bis 3, dadurch gekennzeichnet, daß die Deckschichten im wesentlichen aus einem
- statistischen Propylen/Ethylen-Copolymer
- statistischen Propylen/Buten (1)-Copolymer
- statistischen Propylen/Ethylen/Olefin-Terpolymer
- Mischungen aus zwei oder drei der vorstehenden Polymere bestehen.

5. Siegelfähige Folie nach den Ansprüchen 1 bis 4, dadurch gekennzeichnet, daß die Deckschichten A als Antiblockmittel Siliciumdioxid, Calciumcarbonat, Polymethylmethacrylat, Polycarbonat, Silicon oder HDPE (High-Density-Poly-Ethylen) enthalten.

6. Siegelfähige Folie nach den Ansprüchen 1 bis 5, dadurch gekennzeichnet, daß die Basisschicht C und/oder die Deckschichten A ein Antistatikum enthalten.

7. Folie nach einem der Ansprüche 1 bis 6, dadurch gekennzeichnet, daß sie ein oder beidseitig Corona-, Flamm-, Plasma- oder Fluorvorbehandelt ist.

8. Verwendung der siegelfähigen Folie nach einem oder mehreren der Ansprüche 1 bis 7 als Verpackungsmaterial.

## Claims

1. An oriented, in particular biaxially oriented, sealable polypropylene film having an improved water vapour barrier effect and a considerably reduced coefficient of friction for packaging purposes, characterised in that it contains no polydimethylsiloxane and has the following structure:
A B C B A
a) wherein C is a base layer of polypropylene and a hydrocarbon resin which has a molecular weight of up to about 2000 g/mol and a softening point above 130°C, and 0.05 to 0.5 wt.% of erucic amide,
b) wherein B represents two jacket layers, which are free from hydrocarbon resin, made from highly isotactic polypropylene with an isotacticity >94%, wherein the ratio of the thickness of the jacket layer to the thickness of the base layer is between 0.01 and 0.1, and
c) wherein A represents two surface layers of a heat-sealable polyolefin, co- or terpolymer, wherein said surface layers comprise at least an antiblocking agent, an antistatic agent and, as a lubricant, 0.05 to 0.5 wt.% of erucic amide.

2. A sealable film according to Claim 1, characterised in that the base layer contains a hydrocarbon resin from the group comprising petroleum resins, terpene resins or coal tar resins.

3. A sealable film according to Claim 2, characterised in that the hydrocarbon resin is a hydrogenated, oligomeric cyclopentadiene resin.

4. A sealable film according to Claims 1 to 3, characterised in that the surface layers substantially comprise
- random propylene/ethylene copolymer
- random propylene/1-butene copolymer
- random propylene/ethylene/olefin terpolymer
- mixtures of two or three of the above polymers.

5. A sealable film according to Claims 1 to 4, characterised in that the surface layers A comprise silicon dioxide, calcium carbonate, polymethylmethacrylate, polycarbonate, silicone or HDPE (high density polyethylene) as an antiblocking agent.

6. A sealable film according to Claims 1 to 5, characterised in that the base layer C and/or the surface layers A contain an antistatic agent.

7. A film according to one of Claims 1 to 6, characterised in that it has been pretreated on one or both sides by corona, flame, plasma or fluorine pretreatment.

8. Use of the sealable film according to one or more or Claims 1 to 7 as a packaging material.

## Revendications

1. Feuille de polypropylène apte au scellement, orientée, en particulier ayant subi à une orientation biaxiale, possédant un effet amélioré de blocage de la vapeur d'eau avec des coefficients de friction considérablement diminués, utilisée à des fins d'emballage, caractérisée en ce qu'elle est exempte de polydiméthylsiloxane et possède la composition ci-après:
A B C B A
a) où C représente la couche centrale constituée par du polypropylène et par une résine d'hydrocarbure qui présente une masse molaire allant jusqu'à environ 2000 g/mole et qui possède un point de ramollissement supérieur à 130°, et par un amide de l'acide érucique à concurrence de 0,05 à 0,5% en poids,
b) et B représente deux couches d'enveloppe exemptes de résine d'hydrocarbure, constituées par du polypropylène à teneur isotactique élevée, dont l'isotacticité est >94%, le rapport de l'épaisseur de la couche d'enveloppe à l'épaisseur de la couche de base se situant entre 0,01 et 0,1,
c) et A représente deux couches de recouvrement constituées par un copolymère ou un terpolymère de polyoléfine thermosoudable, ces couches de recouvrement contenant au moins un agent d'antiblocage, un agent antistatique et, à titre d'agent de glissement, un amide de l'acide érucique à concurrence de 0,05 à 0,5% en poids.

2. Feuille apte au scellement selon la revendication 1, caractérisée en ce que la couche de base contient une résine d'hydrocarbure choisie parmi le groupe comprenant les résines de pétrole, les résines terpéniques ou les résines de goudron de houille.

3. Feuille apte au scellement selon la revendication 2, caractérisée en ce que la résine d'hydrocarbure est une résine oligomère hydrogénée de cyclopentadiène.

4. Feuille apte au scellement selon les revendications 1 à 3, caractérisée en ce que les couches de recouvrement sont constituées essentiellement par
- un copolymère statistique de propylène/éthylène
- un copolymère statistique de propylène/butène(1)
- un terpolymère statistique de propylène/éthylène/oléfine
- des mélanges de deux ou trois des polymères indiqués ci-dessus.

5. Feuille apte au scellement selon les revendications 1 à 4, caractérisée en ce que les couches de recouvrement A contiennent, à titre d'agent d'antiblocage, du dioxyde de silicium, du carbonate de calcium, du polyméthacrylate de méthyle, du polycarbonate, du silicium ou du HDPE (High-Density-Poly-Ethylen).

6. Feuille apte au scellement selon les revendications 1 à 5, caractérisée en ce que la couche de base C et/ou les couches de recouvrement A contiennent un agent antistatique.

7. Feuille selon une des revendications 1 à 6, caractérisée en ce qu'elle a été soumise, sur une face ou sur les deux faces, à un prétraitement de décharges à effluves négatives, à la flamme, au plasma ou au fluor.

8. Utilisation de la feuille apte au scellement selon une ou plusieurs des revendications 1 à 7, comme matière d'emballage.
